# EUROPÄISCHE PATENTANMELDUNG

(11) **EP 3 453 514 A1**
(43) Veröffentlichungstag der Anmeldung: **13.03.2019**
(21) Anmeldenummer: 17001523.4
(22) Anmeldetag: 12.09.2017
(51) Int. Cl.: B29C 47/68, B29C 47/08, B29C 47/36, B29C 47/50, B29C 47/76, B29B 7/58, B29B 7/84

(54) **VORRICHTUNG UND VERFAHREN ZUM FILTERN UND ENTGASEN EINER KUNSTSTOFFSCHMELZE**

(71) Anmelder: Next Generation Analytics GmbH, 4710 Grieskirchen (AT)
(72) Erfinder: Kastner, Friedrich, 4710 Grieskirchen (AT)
(74) Vertreter: Landgraf, Elvira

(57) **Zusammenfassung**

Vorrichtung und Verfahren zum Filtern und Entgasen einer Kunststoffschmelze, insbesondere einer thermoplastischen Kunststoffschmelze, aufweisend einen Eintragsextruder (11), der mindestens eine in einem Gehäuse drehbare Extruderschnecke (13) aufweist, wobei der Eintragsextruder in den Eintragsbereich eines oder mehrerer paralleler Schmelzefiltermodule (31) mündet und im Austragsbereich des/der Schmelzefilter ein Austragsextruder (21) mit mindestens einer Extruderschnecke (23) situiert ist, der entgegen der Richtung des Eintragsextruders in der Weise betrieben wird, dass die Schneckenspitze (24) als Einzugszone und der antriebsnahe Bereich als Austragszone fungiert, wobei für den Austrag der Schmelze vor dem Antrieb (22) des Austragsextruders eine Austragsöffnung (27) im Gehäuse vorgesehen ist, wobei der Schaft der Extruderschnecke des Austragsextruders durch ein Dichtelement (26) gegen den Antrieb des Austragsextruders abgedichtet ist.

## Beschreibung

Die Erfindung betrifft eine Vorrichtung und ein Verfahren zum Entgasen und Filtern von insbesondere thermoplastischen Kunststoffschmelzen.

Kunststoffe aus Produktionsabfall oder bereits in Umlauf gewesenes Kunststoffmaterial enthalten Verunreinigungen, die beispielsweise durch Bedruckung, Lackierung oder Verschmutzung entstehen, aber auch Metalle, andere Kunststoffe und organische Verunreinigungen sind in Kunststoffabfällen vorhanden
Die Verunreinigungen bestehen oft auch aus niedermolekularen oder leicht flüchtigen Stoffen. Die niedermolekularen Verunreinigungen weisen oft einen hohen Dampfdruck auf und können beim Aufheizen der Kunststoffe wie mit einem Treibmittel aufgeschäumt werden
Vor der Wiederaufbereitung müssen diese Kunststoffmaterialien daher gereinigt werden.

Ab einer gewissen Schmelzetemperatur kann der Dampfdruck der Inhaltsstoffe so groß werden, dass durch den Dampfdruck der Verunreinigung Gasblasen im Trägermaterial gebildet werden und damit die Qualität des Materials stark beeinträchtigt wird.
Leider können diese Inhaltsstoffe oft erst im Schmelzezustand des Trägermaterials entfernt werden, bzw. ist es auch hier erst möglich die gasförmigen oder Gas emittierenden Inhaltsstoffe zu entfernen. Klassische Trocknungsmethoden sind meist sehr zeitaufwändig, da hier ein Diffusionsprozess durch das Material stattfinden muss und auch die Emmissionsreservoire nicht entfernt werden können.

Aus WO 93/04841 A ist bekannt, den aufzubereitenden Kunststoff in einem Extruder aufzuschmelzen, durch einen Filter zu leiten und anschließend zur Entfernung von flüchtigen Verunreinigungen zu entgasen. Um dabei einen Übertritt von aufgeschmolzenem Kunststoff von Plastifizierungsabschnitt zum Entgasungs- bzw. Austragsabschnitt zu vermeiden und damit sicherzustellen, dass sämtlicher aufgeschmolzener Kunststoff durch den Schmelzefilter durchtritt, ist zwischen dem Plastifizierungsabschnitt und dem Entgasungsabschnitt ein gegenläufiger Fördergang vorgesehen, der eine dem Schneckengewinde von Plastifizierungsabschnitt, Entgasungsabschnitt und Austragsabschnitt entgegengesetzte Steigung aufweist. Dadurch wird ein Anteil an bereits durch den Schmelzefilter hindurchgetretenem Schmelzestrom wieder in den Plastifizierungsabschnitt zurückgeführt. Dadurch soll vermieden werden, dass ungereinigtes Kunststoffmaterial unter Umgehung des Schmelzefilters direkt in den Entgasungs-bzw. Austragsabschnitt gelangt.

Nachteil dieses Verfahrens ist, dass in der Praxis trotzdem der Schmelzestrom mitsamt zumindest Restverunreinigungen auf die Dichtung auftrifft. Besonders bei metallischen oder mineralischen Verunreinigungen führt dieser Strom an abrasivem Material zu einer Abnützung der Dichtfläche und früher oder später geht die Schmelzebarriere verloren und Material tritt über die Dichtfläche in die nachfolgende Schneckenzone über. Es entsteht dann also eine Art Bypass und kontaminiertes, ungefiltertes Material kann den Extruder passieren.

Daher wurde in WO 94/29097 A vorgeschlagen, im Gehäuse des zweiten Schneckenabschnittes zwischen der Einströmöffnung und den Entgasungsöffnungen zumindest ein Staukörper für den Kunststoffstrom vorzusehen, der den Kunststoffstrom in eine schlauchförmige Gestalt zwingt und relativ zur Einströmöffnung verstellbar ist, wobei der Staukörper so vor der Einströmöffnung liegt, dass der aus der Einströmöffnung in das Gehäuse des zweiten Schneckenabschnittes strömende Kunststoff direkt auf den Umfang des Staukörpers trifft, der im axialen Abstand vor der ihm am nächsten liegenden Entgasungsöffnung angeordnet ist und einen sich zum zweiten Schneckenabschnitt hin verjüngenden Querschnitt hat.

Nachteil dieser Vorrichtung ist es, dass der Staukörper durch die Kunststoffschmelze mechanischem Verschleiß ausgesetzt ist und dadurch der Staukörper im längeren Gebrauch zunehmend seine Dichtigkeit verliert und ungefilterte Schmelze den Extruder passieren kann.

Aus WO 2007/124519 A ist ein Extruder zum Entgasen und Filtern von Kunststoffschmelzen bekannt, mit einer in einem Gehäuse gelagerten Extruderschnecke, die einen zulaufseitigen Plastifizierungsabschnitt, einen einem Austragsabschnitt vorgelagerten Entgasungsabschnitt und zwischen dem Plastifizierungsabschnitt und dem Entgasungsabschnitt einen gegenläufigen Fördergang umfasst, und mit wenigstens einem den gegenläufigen Fördergang überbrückenden, ein Schmelzenfilter enthaltenden Strömungskanal, wobei die Extruderschnecke zwischen dem gegenläufigen Fördergang und der auslaufseitigen Mündung des Strömungskanals einen gleichläufigen Fördergang bildet und wobei das Gehäuse im Übergangsbereich zwischen dem gegenläufigen und dem gleichläufigen Fördergang wenigstens eine Entgasungsöffnung aufweist.
Dadurch soll der direkte Material- und Gasübertritt vom Plastifizierungsabschnitt in den Entgasungsabschnitt durch den Fördergang hindurch vermieden werden.

Aus WO 2013/013916 A ist eine Vorrichtung zum Entgasen von thermoplastischem Extrudat bekannt bestehend aus einem Extrudergehäuse und einer in diesem Gehäuse gelagerten Extruderschnecke, die mindestens einen Dichtabschnitt aufweist. Dieser Dichtabschnitt teilt das Extrudergehäuse axial in eine stromaufwärtige und eine stromabwärtige Kammer, wobei ein Übertrittskanal von der stromaufwärtigen kammer in die stromabwärtige Kammer führt. In der stromabwärtigen Kammer ist mindestens eine Gasabzugsöffnung angeordnet, die in Förderrichtung der Extruderschnecke in der stromabwärtigen Kammer vor der Mündung des Übertrittskanals angeordnet ist. Dadurch soll der Entgasungsgrad der Kunststoffschmelze während desgesamten Betriebes und auch bei einer Wiederinbetriebnahme der Vorrichtung verbessert werden. Auch hier besteht der Nachteil, dass der Dichtabschnitt hohem mechanischen Verschleiß ausgesetzt ist und dadurch mit fortschreitender Betriebsdauer ein direkter Durchtritt der verunreinigten Schmelze nicht ausgeschlossen werden kann.

Aufgabe der Erfindung war es eine Vorrichtung und ein Verfahren zum Entgasen und Filtern von Kunststoffschmelze bereitzustellen, das die Nachteile des Standes der Technik vermeidet.

Gegenstand der Erfindung ist daher eine Vorrichtung zum Filtern und Entgasen von Kunststoffschmelzen, insbesondere thermoplastischen Kunststoffschmelzen, aufweisend einen Eintragsextruder, der mindestens eine in einem Gehäuse drehbare Extruderschnecke aufweist, wobei der Eintragsextruder in den Eintragsbereich eines oder mehrerer paralleler Schmelzefilter mündet und im Austragsbereich des/der Schmelzefilter ein Austragsextruder mit mindestens einer Extruderschnecke situiert ist, der entgegen der Richtung des Eintragsextruders in der Weise betrieben wird, dass die Schneckenspitze als Einzugszone und der antriebsnahe Bereich als Austragszone fungiert, für den Austrag der Schmelze vor dem Antrieb des Austragsextruders eine Austragsöffnung im Gehäuse vorgesehen ist, wobei der Schaft der Extruderschnecke durch Dichtelemente gegen den Antrieb des Austragsextruders abgedichtet ist.

Durch die erfindungsgemäße Vorrichtung und das erfindungsgemäße Verfahren ist es möglich unmittelbar nach dem Aufschmelzen Gase und gasemittiemde Stoffe aus einer Schmelze, die vorher erzeugt werden kann, herauszufiltern und im Anschluss das Material in guter Qualität weiter zu plastifizieren und zu homogenisieren.
Falls nötig kann dabei der Reinigungsprozess durch Additive, Hilfsstoffe, Absorber, Katalysatoren und dergleichen unterstützt werden wobei die Zusatzstoffe bei der Filtration mit entfernt werden oder ausgasen können. Eintrags- und/oder Austragsextruder können als Einwellen-, Zweiwellen oder Mehrwellenextruder ausgeführt sein.

Der Eintragsextruder mündet zweckmäßigerweise in dem oder den Schmelzefilter(n) vorgeschaltete Schmelzeventile und/oder Schmelzeweichen. Im Austragsbereich des/der Schmelzefilter sind dem Schmelzefilter/ der Schmelzweiche nachgeschaltete Schmelzeventile und/oder Schmelzeweichen vorgesehen, hinter denen der Austragsextruder situiert ist.

Als Schmelzefilter sind beispielsweise übliche Bandfilter einsetzbar. Aber auch alle anderen Filtrationssysteme sind denkbar. Insbesondere können in diesem Bereich auch Entgasungssysteme verbaut sein, die neben Feuchtigkeit auch Geruchsstoffe z.B. durch Anlegen von Vakuum z.B 10-10⁻⁴mbar)

Im Bereich des Austragsextruders ist im Gehäuse mindestens eine Austragsöffnung vorgesehen, die in einem Winkel bis zu 120° angeordnet ist.

Der Austragsextruder wird entgegen der üblichen Richtung betrieben. Die Schneckenspitze des Austragsextruders ragt dabei in das Austrittselement des Filters und fördert die Schmelze weg in Richtung Motor. Damit ist der Austragsextruder spiegelbildlich zum Eintragsextruder ausgeführt.

Der Austragsextruder weist eine Einzugszone, die im Bereich der Schneckenspitze liegt, auf. An diese Einzugszone schließt sich die Kompressionszone und dann die Austragszone vor dem Bereich des Antriebs des Austragsextruders an.

Im Bereich des Antriebs des Austragsextruders wird die Schnecke über Dichteinrichtungen abgedichtet. Die Abdichtung kann beispielsweise durch Schmelzerstarrung, durch ein Labyrinth oder durch Gegenlaufelemente erfolgen. Es ist aber auch möglich die Abdichtung durch Zuführung von Dichtmasse oder Kunststoffgranulat ggf. über einen Zusatzextruder zu erzielen.

Selbst wenn es in diesem Bereich zu Leckagen kommen sollte sind diese für die Qualität der gefilterten Schmelze ohne Bedeutung, die die Schmelze bereits gefiltert ist und somit auch nicht zum Verschleiß der Bauteile des Extruders beitragen kann.

Die Schmelze wird dabei nicht wie üblich über die Schneckenspitze ausgetragen, sondern senkrecht oder in einem Winkel bis zu 120° ausgeleitet. Zur Ausleitung der Schmelze kann wiederum eine Schnecke im Austragsbereich vorgesehen sein, die die Schmelze über die Austragsöffnung aus dem Extruder fördert.

Im Bereich des Austragsextruders können eine oder mehrere Entgasungszonen vorgesehen sein. Vorteilhafterweise kann die Entgasung in diesen Entgasungszonen unter Unterdruck erfolgen.
Es ist aber auch möglich die Entgasung durch Drähte, Meander, Zapfen oder Scherspalte unterstützt werden.

Die Schneckenspitzen des Ein- und/oder Austragsextruders können auch gelagert sein und müssen kein freies Ende haben. Das ist insbesondere von Vorteil, wenn durch Absperren eines der beiden Filter, beispielsweise bei einem Reinigungsvorgang des Filters eine unsymmetrische Belastung auftritt. Die Lagerung der Schnecke ermöglich insbesondere bei längeren Schnecken einen besseren Gleichlauf und kann zusätzliche Axialkräfte aufnehmen.

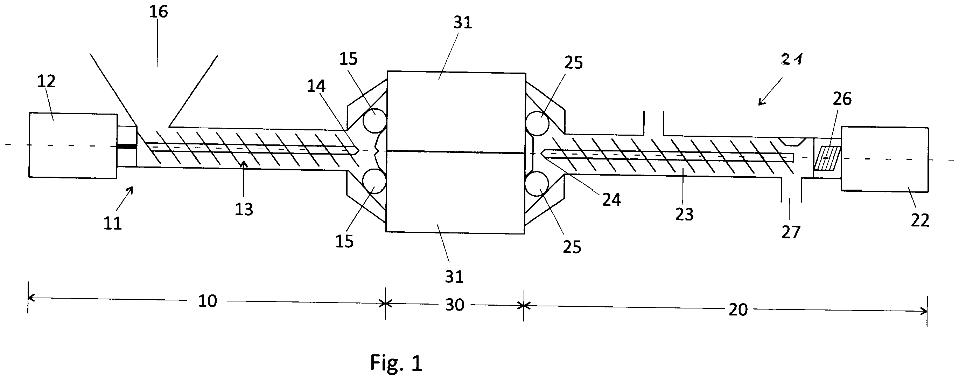

In Figur 1 ist eine erfindungsgemäße Vorrichtung zum Filtern und Entgasen von Kunststoffschmelzen dargestellt.
In diesem Ausführungsbeispiel werden 2 Filtereinheiten verwendet

Darin bedeuten
- 10: die Eintragszone
- 20: die Austragszone
- 30: die Filterzone
- 11: den Eintragsextruder
- 12: den Antrieb des Eintragstragesextruders
- 13: die Schnecke des Eintragsextruders
- 14: die Schneckenspitze des Eintragsextruders
- 15: die Schmelzeventile für den Eintrag der Schmelze in den Filterbereich
- 16: die Zuführungsöffnung der Schmelze zum Eintragsextruder
- 21: den Austragsextruder
- 22: den Antrieb des Austragsextruders
- 23: die Schnecke des Austragsextruders
- 24: die Schneckenspitze des Austragsextruders
- 25: die Schmelzeventile für den Austrag der Schmelze
- 26: ein Dichtelement
- 27: die Austragsöffnung zum Transport der Schmelze aus dem Austragsextruder
- 31: Filtermodule

## Patentansprüche

1. Vorrichtung zum Filtern und Entgasen von Kunststoffschmelzen, insbesondere thermoplastischen Kunststoffschmelzen, aufweisend einen Eintragsextruder, der mindestens eine in einem Gehäuse drehbare Extruderschnecke aufweist, wobei der Eintragsextruder in den Eintragsbereich eines oder mehrerer paralleler Schmelzefilter mündet und im Austragsbereich des/der Schmelzefilter ein Austragsextruder mit mindestens einer Extruderschnecke situiert ist, der entgegen der Richtung des Eintragsextruders in der Weise betrieben wird, dass die Schneckenspitze als Einzugszone und der antriebsnahe Bereich als Austragszone fungiert, wobei für den Austrag der Schmelze vor dem Antrieb des Austragsextruders eine Austragsöffnung im Gehäuse vorgesehen ist, wobei der Schaft der Extruderschnecke durch Dichtelemente gegen den Antrieb des Austragsextruders abgedichtet ist.

2. Vorrichtung nach Anspruch 1, **dadurch gekennzeichnet dass** im Bereich des Austragsextruders die Austragsöffnung in einem Winkel von bis zu 120° angeordnet ist.

3. Vorrichtung nach Anspruch1 oder 2, **dadurch gekennzeichnet, dass** der Eintragsextruder in dem Schmelzefilter vorgeschaltete Schmelzeventile und/oder Schmelzeweichen mündet.

4. Vorrichtung nach einem der Ansprüche 1 bis 3, **dadurch gekennzeichnet, dass** im Austragsbereich des/der Schmelzefilter dem Schmelzefilter nachgeschaltete Schmelzeventile und/oder Schmelzeweichen vorgesehen sind, nach denen der Austragsextruder situiert ist.

5. Vorrichtung nach einem der Ansprüche 1 bis 4, **dadurch gekennzeichnet, dass** der Austragsextruder mindestens eine Einzugszone, eine Kompressionszone und eine Austragszone aufweist.

6. Vorrichtung nach einem der Ansprüche 1 bis 5, **dadurch gekennzeichnet, dass** Im Bereich des Austragsextruders eine oder mehrere Entgasungszonen vorgesehen sind.

7. Vorrichtung nach einem der Ansprüche 1 bis 6, **dadurch gekennzeichnet, dass** die Entgasung in der Entgasungszone unter Unterdruck erfolgt.

8. Vorrichtung nach einem der Ansprüche 1 bis 7, **dadurch gekennzeichnet, dass** die Entgasung in der Entgasungszone durch Drähte, Meander, Zapfen oder Scherspalte unterstützt wird.

9. Vorrichtung nach einem der Ansprüche 1 bis 8, **dadurch gekennzeichnet, dass** der Eintragsextruder mindestens eine mindestens eine Einzugszone, eine Kompressionszone und eine Austragszone aufweist.

10. Vorrichtung nach einem der Ansprüche 1 bis 9, **dadurch gekennzeichnet**, die Misch- und Förderzone(n) im Austragsextruder spiegelbildlich zur Anordnung der entsprechenden Zonen im Eintragsextruder angeordnet sind.

11. Vorrichtung nach einem der Ansprüche 1 bis 10, **dadurch gekennzeichnet, dass** die Schneckengeometrie im Austragsextruder spiegelbildlich zur Schneckengeometrie des Eintragsextruders ausgeführt ist.

12. Vorrichtung nach einem der Ansprüche 1 bis 11, **dadurch gekennzeichnet, dass** als Dichtelemente, die den Austragsextruderschneckenraum gegen den Antrieb des Ausgangsextruders abdichten Einrichtungen zur Schmelzerstarrung, Gegenlaufelemente oder ein Labyrinthsystem verwendet werden oder die Abdichtung über eine Zuführung von Dichtmassen oder Kunststoffgranulat ggf. über einen Zusatzextruder erzielt wird.

13. Vorrichtung nach einem der Ansprüche 1 bis 12, **dadurch gekennzeichnet, dass** der Austragsextruder und/oder der Eintragsextruder zwei oder mehrere Extruderschnecken aufweist, die gleich- oder gegenlaufend ausgeführt sein können.

14. Vorrichtung nach einem der Ansprüche 1 bis 13, **dadurch gekennzeichnet, dass** die Schneckenspitzen gelagert sind.

15. Verfahren Filtern und Entgasen von Kunststoffschmelzen, insbesondere thermoplastischen Kunststoffschmelzen durchgeführt in einer Vorrichtung nach einem der Ansprüche 1 bis 15.
